# EUROPÄISCHE PATENTSCHRIFT

(11) **EP 3 563 076 B1**
(45) Veröffentlichungstag und Bekanntmachung des Hinweises auf die Patenterteilung: **02.07.2025**
(21) Anmeldenummer: 17798120.6
(22) Anmeldetag: 25.10.2017
(51) Int. Cl.: F16K 31/06

(54) **ELEKTROMAGNETISCHE KLAPPANKER-VENTILVORRICHTUNG**
ELECTROMAGNETIC HINGED ARMATURE VALVE DEVICE
DISPOSITIF DE VANNE ÉLECTROMAGNÉTIQUE À ARMATURE BASCULANTE

(30) Priorität: 30.12.2016 DE 102016125950
(43) Veröffentlichungstag der Anmeldung: 06.11.2019
(73) Patentinhaber: ETO MAGNETIC GmbH, 78333 Stockach (DE)
(72) Erfinder: THODE, Oliver, 78333 Stockach (DE); RAFF, Viktor, 78467 Konstanz (DE)
(74) Vertreter: Daub, Thomas
(86) Internationale Anmeldenummer: PCT/EP2017/077344
(87) Internationale Veröffentlichungsnummer: WO 2018/121901

(56) Entgegenhaltungen:
- EP-A2- 1 860 314
- WO-A1-2006/122975
- WO-A2-2008/068578
- DE-A1- 3 346 290
- DE-B3- 102014 115 206
- FR-A- 1 531 234
- US-A- 5 163 623
- US-A- 5 762 097

## Beschreibung

Die vorliegende Erfindung betrifft eine elektromagnetische Klappanker-Ventilvorrichtung nach dem Oberbegriff des Hauptanspruchs. Derartige Vorrichtungen sind aus dem Stand der Technik allgemein bekannt und weisen als elektromagnetisch bewegbare Baugruppe Ankermittel auf, welche relativ zu einer stationären Anordnung aus einem Kern (Kernmitteln) und einer damit zusammenwirkenden bestrombaren Spule (Spulenmittel) bewegbar sind, wobei diese Bewegung eine Schwenk- bzw. Klappbewegung ist und durch ein üblicherweise seitliches Anlenken bzw. Lagern der typischerweise flach ausgebildeten Ankermittel ermöglicht ist.

Diese Schwenk- bzw. Klappbewegung legt dann einen Ventilsitz frei oder verschließt diesen, so dass auf diese Weise dann die Ventilfunktionalität durch den gesteuert verschließbaren Ventilsitz realisiert wird.

Derartige elektromagnetisch betätigte Klappanker-Ventilvorrichtungen zeichnen sich üblicherweise durch schnelle Schaltzeiten aus, da üblicherweise mit geringem Schwenk- bzw. Klapphub und bei einends angelenktem flachen Anker lediglich geringe Massen bewegt werden müssen.

Allerdings ist bei gattungsgemäßen und als generisch bzw. allgemein bekannt vorausgesetzten Klappanker-Ventilvorrichtungen üblicherweise die Justage bzw. die (Fein-)Einstellung des Ankerhubs (also des Klapp-bzw. Schwenkhubs) nicht unproblematisch und wird häufig durch zusätzliche mechanische Mittel bzw. Baugruppen wie etwa Einstell- bzw. Justageschrauben gelöst, welche dann bei der Montage eines jeweiligen Ventils im Einzelfall für den jeweiligen Hub eingestellt bzw. justiert werden müssen. Diese - insbesondere unter Aspekten einer Großserienfertigung - aufwändige und damit verbesserungswürdige Technologie führt zusätzlich zu dem Problem erhöhten Dichtungsaufwand mit einer Dichtung des (durch die Justage potentiell veränderten) Ankerraums, denn ein gattungsgemäß durch zusätzliche mechanische Mittel einzustellender Schwenk- bzw. Klapphub beeinflusst die Druckverhältnisse im Ankerraum (d.h. dem von einem mittels der Ventilvorrichtung zu schaltenden, druckbeaufschlagten Fluid beschickten Raum im (Ventil-)Gehäuse), welcher zur Sicherstellung ordnungsgemäßer Ventilfunktionalität gegenüber der Umgebung abgedichtet sein muss.

Die EP 1 860 314 A2 beschreibt eine Gaszufuhrvorrichtung, die eine schnelle und feine Dosierung von Gas, insbesondere von Kraftstoff, insbesondere Flüssiggas, zum Verbrennungsmotor ermöglicht, die mindestens ein Magnetventil umfasst, das gesteuert wird, um Gas zu einem entsprechenden Zylinder des Motors zuzuführen; wobei das Magnetventil einen Gasverteiler und mindestens eine Auslasskanal für das Brenngas umfasst, wobei ein entsprechender Verschluss, der von einem Anker getragen wird, durch einen entsprechenden Elektromagneten aktiviert wird, um den Einlassverteiler mit einer Auslasskanal zu verbinden; wobei der Anker die Form eines räumlichen Hebels aufweist, der sich um eine Kante dreht, die sich zwischen einer Außenfläche und einem geneigten Abschnitt des Ankers befindet, und eine ebene Oberfläche der ebenen Feder berührt, und ein elastisches Element, das auf den Anker mit einer vorbestimmten elastischen Kraft wirkt, die ausreicht, um diesen Verschluss normalerweise in einer geschlossenen Position zu halten, die das Auslassloch schließt, falls dem Elektromagneten keine Energie zugeführt wird.

Die FR 1 531 234 A beschreibt ein elektrohydraulisches Servoventil. Dieses umfasst eine Druckregelkammer, in der ein Fluid aus einer Quelle unter Druck eintritt, eine Düse, durch die das Fluid aus der Regelkammer austritt, ein Steuerelement, das den Durchfluss des durch die Düse strömenden Fluids verringert und variiert, einen einseitigen Elektromagneten, der mit dem Steuerelement kombiniert ist, dass das Element betätigt, um eine Drosselwirkung auf die Durchflussmenge auszuüben, die nicht durch die Düse unter der Wirkung eines elektrischen Eingangssignals, das an den Elektromagneten übertragen wird, erreicht wird, und ein Element, das einen Schub auf dieses Steuerelement ausübt, indem es die Drosselwirkung erhöht, wobei diese Schubkraft umgekehrt proportional zur Drosselwirkung ist und sowohl die Magnetkraft des Elektromagneten vervollständigt, um die Intensität der Eingangssignale zu verringern.

Die WO 2008/068578 A2 beschreibt ein System zum Zuführen von Gaskraftstoff zu einem Verbrennungsmotor, mit: einen Kraftstofftank; ein fluidisches Verbindungsmittel, entlang dessen der Kraftstoff strömt und das strömungstechnisch zwischen dem Tank und einem Zylinder des Motors angeordnet ist; und einen Elektroeinspritzer, der strömungstechnisch in Reihe zu dem fluidischen Verbindungsmittel angeordnet ist und der zwischen dem Tank und dem Zylinder angeordnet ist und selektiv aktiviert wird, um den Kraftstofffluss zum Zylinder zu deaktivieren oder zu aktivieren; der Elektroinjektor ist in Bezug auf die fluidischen Verbindungsmittel ausschließlich durch Verbinden mindestens eines Einlasses oder Auslasses des Elektroinjektors mit mindestens einem durch die fluidischen Verbindungsmittel definierten Rohr angeordnet.

Die US 5 762 097 A beschreibt ein modulares Ventil für Fluide, umfassend ein Ventilgehäuse mit einer Vielzahl von Fluidanschlüssen, eine federbelastete Schaltwippe, die in das Ventilgehäuse einsetzbar ist, und einen elektromagnetischen Ventilantrieb. Zwischen dem Ventilgehäuse und dem elektromagnetischen Ventilantrieb wird eine im Allgemeinen magnetisch nicht leitende Platte mit lokal begrenzten magnetisch leitenden Bereichen eingesetzt, durch die der elektromagnetische Ventilantrieb auf einen von zwei Schenkeln der Schaltwippe durchwirkt, während der andere Schenkel nicht magnetisch beaufschlagbar ist.

Die WO 2006/122975 A1 zeigt eine Magnetventilanordnung für eine Brenngaszufuhrvorrichtung eines Motors, mit mindestens einem Magnetventil, das so gesteuert werden kann, dass es Brenngas zu dem Motor leitet, wobei das Magnetventil mindestens eine Auslassöffnung für das Brenngas aufweist. Dabei trägt ein Anker einen Verschluss, der durch einen Elektromagneten zur Steuerung der Auslassöffnung betätigt werden kann, wobei der Anker durch eine längliche Platte gebildet wird und wobei ein elastisches Element auf die Platte mit einer Kraft wirkt, um den Verschluss normalerweise in einer geschlossenen Position des Magnetventils zu halten.

Die DE 33 46 290 A1 zeigt eine Elektromagneteinheit mit einem Magnetkern, einen Spulenkörper, einem ersten Ventilsitz, der in einem Flansch des Spulenkörpers ausgebildet ist, und eine Ventileinheit mit einem beweglichen Joch, das innerhalb einer Ventilkammer angeordnet ist und dessen eines Ende schwenkbarer ist. Wenn die Spule stromdurchflossen ist, wird das bewegliche Joch an den Kern angezogen und gegen den ersten Ventilsitz gedrückt, um eine Verbindung zwischen einem Fluidkanal und der Ventilkammer herzustellen.

Diese Probleme führen bislang zu der Konsequenz, dass eine kostengünstige Großserien- bzw. Massenfertigung von elektromagnetisch betätigten Klappanker-Ventilvorrichtungen (mit entsprechenden Toleranzen bzw. Streuungen) nur sehr eingeschränkt möglich war und entsprechend diese Ventiltechnologie, kostenbedingt, ihr vollständiges Potential bislang nicht ausschöpfen konnte.

Aufgabe der vorliegenden Erfindung ist es daher, eine elektromagnetische Klappanker-Ventilvorrichtung nach dem Oberbegriff des Hauptanspruchs im Hinblick auf ihre Herstellungs- und Betriebseigenschaften zu verbessern, dabei eine einfachere und damit kostengünstigere Fertigbarkeit unter Großserienbedingungen zu ermöglichen, welche insbesondere auch einen Toleranzausgleich bzw. eine Justierbarkeit des Schwenk- bzw. Klapphubs für die Ankermittel vereinfacht.

Die Aufgabe wird durch die elektromagnetische Klappanker-Ventilvorrichtung mit den Merkmalen des Hauptanspruchs gelöst. Vorteilhafte Weiterbildungen der Erfindung sind in den Unteransprüchen beschrieben. Zusätzlich Schutz im Rahmen der vorliegenden Erfindung wird beansprucht für eine Verwendung einer derartigen elektromagnetischen Klappanker-Ventilvorrichtung zur Realisierung eines Regelventils, insbesondere für Anwendungen einer Fluidregelung auf dem Gebiet der Kraftfahrzeugtechnologie.

In erfindungsgemäß vorteilhafter Weise nutzt die vorliegende Erfindung die Spulenträgerbaugruppe und die Ventilsitzbaugruppe so, dass diese, zur Fertigung der erfindungsgemäßen Klappanker-Ventilvorrichtung, nicht nur miteinander verbindbar sind (wobei dies weiterbildungsgemäß unlösbar und/oder druckdicht, bezogen auf das zu schaltende Fluid, geschieht), sondern beide Baugruppen auch vor diesem Verbinden gegeneinander justierbar sind und damit der von diesen Baugruppen bestimmte bzw. beeinflusste Schwenk- bzw. Klapphub der Ankermittel auf einfache und fertigungstechnisch elegante Weise beeinflusst werden kann.

Vorteilhaft lässt sich durch eine solche Fein-Einstellung bzw. Justierung des Arbeitsluftspalts zwischen den Kernmitteln und den Ankermitteln der prinzipielle Vorteil von Klappanker-Ventilen günstig umsetzen, nämlich schnelle Schaltzeiten in Verbindung mit hoher Genauigkeit im Dauerbetrieb. Damit ist insbesondere auch ein Einsatz der erfindungsgemäßen Ventilvorrichtung im Rahmen eines Regelventils bevorzugt, dies beschränkt jedoch nicht die Anwendungsbreite der erfindungsgemäßen Technologie.

Erfindungsgemäß wird es insbesondere unnötig, zusätzliche (mechanische) Baugruppen oder Aggregate für eine Hubjustierung bzw. Hubeinstellung einzusetzen, vielmehr geschieht dies im Rahmen der Erfindung durch die erfindungsgemäße Justage bzw. Justiermöglichkeit der Spulenbaugruppe und der Ventilsitzbaugruppe, welche weiter bevorzugt zu diesem Zweck in einer Anker-Bewegungsrichtung und/oder einer Längsrichtung durch die Ventilvorrichtung, wie etwa durch eine axiale Erstreckung der stationären Kernmittel bestimmt, gegeneinander verschiebbar sind. Zu diesem Zweck weisen weiter bevorzugt die Aggregate geeignete und zu einem solchen verschiebbaren Zusammenwirken ausgestaltete Abschnitte auf, wie etwa zum Ineinandergreifen bzw. gleitenden Zusammenwirken ausgebildete Hülsenabschnitte.

Wird dann, wie weiter bevorzugt und im Rahmen günstiger Weiterbildungen der Erfindung vorgesehen, mindestens eine dieser Baugruppen, weiter bevorzugt beide Baugruppen, aus einem verschweißbaren Polymermaterial realisiert, ermöglicht die vorliegende Erfindung das unlösbare und weiter bevorzugt druckdichte Verbinden beider Baugruppen nach einer geeigneten Justage und damit nach einem (Fein-)Einstellen des vorgesehenen Schwenk- bzw. Klapphubs durch einfaches Verschweißen bzw. punktuelles Verschmelzen des polymeren Werkstoffs. Damit ist dann nicht nur eine kostengünstige Herstellbarkeit der Vorrichtung durch entsprechend günstige Werkstoffe gewährleistet, auch lassen sich diese mit der gewünschten Präzision und etwa unter Einsatz eines ansonsten bekannten Laser-Schweißverfahrens oder dergleichen einfach und elegant dauerhaft und druckdicht verbinden.

Zusätzlich weiterbildend und vorteilhaft ermöglichen es die erfindungsgemäß zusammenwirkenden und gegeneinander vor einem (dauerhaften) Verbinden justierbaren Baugruppen der Spulenträgerbaugruppe bzw. der Ventilsitzbaugruppe, ein geeignetes Schwenk- bzw. Klapplager für die Ankermittel zu realisieren, wobei besonders bevorzugt der weiterbildend plan bzw. (zumindest abschnittsweise) flächig ausgebildete Klappanker an einem Ende in einem von diesen beiden Baugruppen gebildeten Lagerabschnitt schwenkbar geführt werden kann. Weiterbildend kann dann von zumindest einer dieser Baugruppen ein entsprechender (und etwa mit einer gekrümmten Eingriffsfläche versehener) Lagervorsprung konstruktiv einfach und verschleißarm ausgebildet werden. Federmittel würden dann etwa im Zusammenwirken mit der jeweils anderen Baugruppe ein Klapp-bzw. Schwenklager konstruktiv einfach und betriebssicher verwirklichen können.

Konstruktiv bevorzugt ist es ferner, einen magnetflussleitenden Gehäuseabschnitt des erfindungsgemäßen (Ventil-)Gehäuses die Spulenträgerbaugruppe zumindest abschnittsweise umgebend auszugestalten, wobei dieser magnetflussleitende Gehäuseabschnitt insbesondere auch bügelartig bzw. in der Art eines Jochbügels realisiert sein kann. Insbesondere in dieser Weiterbildung der vorbeschriebenen Ausführungsbeispiele ist es dann vorteilhaft, ein (freies) Ende eines derartigen magnetflussleitenden Gehäuseabschnitts so relativ zu den Ankermitteln, insbesondere deren Klapp- bzw. Schwenklagerung benachbart, anzuordnen, dass ein Magnetflusseintrag, erzeugt als Reaktion auf eine Bestromung der stationären Spulenmitteln, über einen in diesem Lagerbereich gebildeten (Arbeits-)Luftspalt in den Klappanker (Ankermittel) erfolgen kann; der weitere Magnetflusskreis würde über die (einen Anschlag für die Ankermittel ausbildenden) Kernmittel und eine (bezogen auf die Ankermittel rückwärtige) Verbindung der Kernmittel mit dem magnetflussleitenden Gehäuseabschnitt geschlossen werden können. Wiederum ermöglicht es eine derartige magnetische Ausgestaltung, die erfindungsgemäße Klappanker-Ventilvorrichtung unter Minimierung der Bauteile bzw. Baugruppen und der Maßtoleranzen großserientauglich zu fertigen bzw. zu montieren. Dies geschieht dann insbesondere auch durch das Nutzen von materialverformenden Fertigungsverfahren, wie etwa einer bevorzugten Verpressung bzw. Verstämmung zwischen dem magnetflussleitenden Gehäuseabschnitt und den Kernmitteln, wie etwa bevorzugt am den Ankermitteln gegenüberliegenden (axialen) Endbereich der Kernmittel vorzusehen.

Im Rahmen der vorliegenden Erfindung realisiert die (bevorzugt aus einem polymeren oder dergleichen spritzfähigen Material realisierte) Ventilsitzbaugruppe unmittelbar und weiter bevorzugt einstückig den zum dichtenden bzw. freilegenden Zusammenwirken mit den Ankermitteln ausgebildete Ventilsitz. Insbesondere zum Gewährleisten einer zuverlässigen Dichtwirkung ist es diesbezüglich weiterbildend und vorteilhaft vorgesehen, den Ankermitteln einen aus einem polymeren oder Elastomermaterial realisierten Dichtabschnitt zuzuordnen, welcher weiter bevorzugt an oder auf der (mindestens einen) Flachseite der Ankermittel und weiter bevorzugt sich durch einen Durchbruch der Ankermittel hindurch erstreckend angeordnet sein kann. Dies ermöglicht nicht nur eine einfache und bevorzugt automatisierbare Fertigbarkeit, auch ist auf diese Weise eine zuverlässige geometrische Zuordnung zum Auslass- bzw. Düsenabschnitt des Ventilsitzes möglich, ohne dass etwa die magnetischen bzw. Flussleiteigenschaften der Ankermittel signifikant beeinträchtigt werden.

In bevorzugter Weiterbildung der Erfindung ist die (aus einem polymeren bzw. spritzfähigen Material realisierte) Ventilsitzbaugruppe zum zusätzlichen Ausbilden des zweiten Ventilein- bzw. auslasses realisiert, welcher, zusammen mit dem durch den Ventilsitz realisierten ersten Ventilein- bzw. auslass, sowohl den Fluidzu- bzw. abfluss als auch den Fluidfluss innerhalb des Ventils bestimmt. Insoweit kommt dann der erfindungsgemäßen Ventilsitzbaugruppe, über die Rolle im Zusammenwirken mit der Spulenträgerbaugruppe hinaus, eine zusätzliche Schlüsselfunktion zu, nämlich im Hinblick auf die Anschlüsse des Ventils betreffend das zu schaltende Fluid. Besonders bevorzugt ist es zudem, diese Baugruppe einstückig zu realisieren, so dass dann mittels eines einzigen Spritzvorgangs diese erfolgskritische Baugruppe kostengünstig und effizient realisiert werden kann.

Durch die vorliegende Erfindung, insbesondere durch das erfindungsgemäß justierbare und dichtende Zusammenwirken zwischen der Spulenträgerbaugruppe und der Ventilsitzbaugruppe, ist der zugehörige Bereich des Ankerraums bereits im Hinblick auf das zu schaltende Fluid gedichtet. Erfindungsgemäß weiterbildend geschieht die vollständige Abdichtung des Ankerraums lediglich noch durch ein Dichten der Kernmittel gegenüber der diese umschließenden Spulenträgerbaugruppe, was weiterbildend in konstruktiv einfacher und fertigungstechnisch günstiger Weise durch das Vorsehen einer Ringdichtung oder dergleichen umlaufender Dichtmittel in einem Ringabsatz zwischen den Kernmitteln und der Spulenträgerbaugruppe geschieht. Erfindungsgemäß vorteilhaft ist damit der Gesamt-Dichtungsaufwand der erfindungsgemäß realisierten Klappanker-Ventilvorrichtung minimiert, was nicht nur den Herstellungsaufwand vermindert, sondern zusätzlich die Gefahr von Undichtigkeiten, Leckageverlusten oder dergleichen Effekten, insbesondere nach langer Betriebs- und Standzeit, herabsetzt.

Insbesondere die vorbeschriebenen vorteilhaften Ausgestaltungen der Erfindung ermöglichen die einfache Realisierung eines stromlos geschlossenen (NC = Normally Closed) Ventils, dergestalt, dass erfindungsgemäß weiterbildend durch das Vorsehen von Federmitteln, etwa einer die Ankermittel gegen den Ventilsitz vorspannenden und sich zu diesem Zweck von den Kernmitteln abstützenden Druckfeder, die vorgesehene geschlossene Nullstellung definiert wird.

Alternative Ausgestaltungen des Ventilsitzes und/oder einzusetzender Federmittel, insbesondere auch das Vorsehen eines möglichen (axialen) Durchbruchs durch die Kernmittel, ermöglichen eine Variation dieser Ventiltopologie, abweichend von der NC-2/2-Topologie in eine NO-2/2-Topologie (d.h. eine stromlos geöffnete (Normally Open = NO) Topologie mit zwei Zu- bzw. Abflüssen und zwei Schaltstellungen), alternativ auch eine 3/2-Topologie mit drei Zu- /Abflüssen, mit einem zusätzlichen (Belüftungs-)Anschluss zu realisieren.

Im Ergebnis gestattet die vorliegende Erfindung das kostengünstige, kleinbauende und einfach justierbare und damit serientaugliche Herstellen von elektromagnetischen Klappanker-Ventilvorrichtungen, so dass mit der vorliegenden Erfindung die Voraussetzungen geschaffen sind, dieses Ventilprinzip zahlreichen Anwendungsgebieten zugänglich zu machen, die bisher aus Kostengründen nicht erschlossen werden konnten.

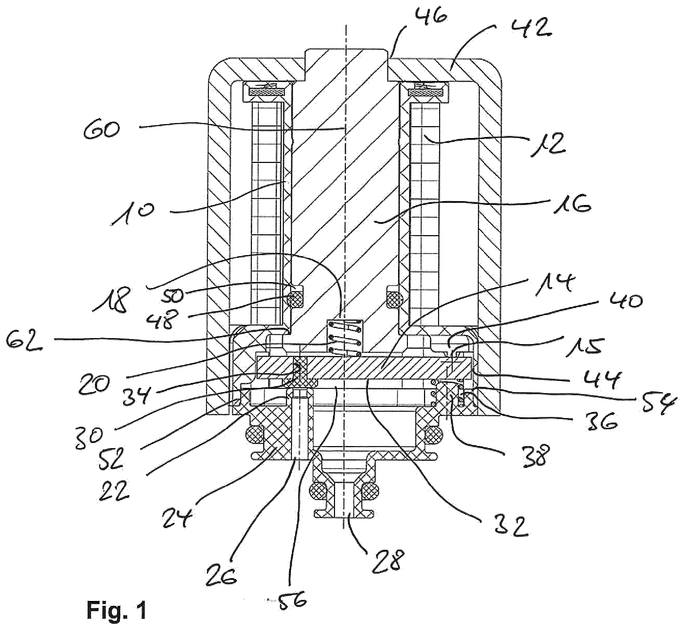

Weitere Vorteile, Merkmale und Einzelheiten der Erfindung ergeben sich aus der nachfolgenden Beschreibung bevorzugter Ausführungsbeispiele sowie anhand der Figuren; diese zeigen in
- Fig. 1: eine Längsschnittansicht durch die elektromagnetische Klappanker-Ventilvorrichtung gemäß einem ersten Ausführungsbeispiel der vorliegenden Erfindung.

Eine durch Spritzgießen aus einem Kunststoffmaterial hergestellte Spulenträgerbaugruppe 10 trägt in ansonsten bekannter Weise eine extern kontaktierbare und bestrombare Wicklung 12, um, dem Prinzip einer Klappanker-Ventilvorrichtung folgend, einen beidseitig planen, flachen und langgestreckten Klappanker 14 um ein Schwenk- bzw. Klappgelenk 15 herum in Richtung auf einen stationären, vom Spulenträger 10 umschlossenen Kern 16 zu verschwenken.

Durch Wirkung einer in einer stirnseitig-ankerseitigen Ausnehmung 18 des Kerns 16 aufgenommenen Druckfeder 20 ist der Klappanker 14 gegen einen Ventilsitz 22 vorgespannt, welcher in düsenartig aus einer durch Spritzgießen aus einem Kunststoffmaterial realisierten Ventilsitzbaugruppe 24 herausgeformt ist und extern zu einem Ventilauslass 26 geöffnet ist. Dieser Ventilauslass ist im gezeigten Ausführungsbeispiel exzentrisch und achsparallel zu einem Ventileinlass 28 angeordnet, welcher gleichermaßen einstückig aus der Ventilsitzgruppe 24 herausgeformt ist und, zusammen mit dem Auslass 26, ein durch Schaltstellungen des Klappankers 14 betätigtes 2/2-Ventil ausbildet (d.h. zwei Ventil-Schaltstellungen, zwei Ein- bzw. Auslässe), wobei durch Wirkung der Druckfeder 20 und deren Vorspannung des Ankers 14 auf den Ventilsitz 22 eine NC-Funktionalität im unbestromten Zustand der Spule 12 in der in der Fig. 1 gezeigten geschlossenen Position gehalten ist.

Konkret dichtet, wie diese Längsschnittansicht verdeutlicht, ein Dichtkörper 30 in der gezeigten (unbestromten) Verschlussstellung den Ventilsitz 22, wobei der Dichtsitz 30, realisiert aus einem polymeren Dichtmaterial, auf einer unteren Ventilsitz-seitigen Flachseite 32 des Ankers gebildet ist und sich, zur Verbesserung der Haftung, der Dauerhaltbarkeit und der Montierbarkeit, durch einen Durchbruch 34 im Anker 14 hindurch erstreckt.

In dem in der Fig. 1 rechtseitigen Bereich und zur Realisierung des Lagers 15 wird der Anker 14 durch Wirkung einer Druckfeder 36, welche einen Vorsprung 38 der Ventilsitzbaugruppe umschließt und sich von dieser abstützt, gegen einen Gelenkvorsprung 40 gedrückt, welcher sich von der Spulenträgerbaugruppe 10 erstreckt. Auf diese Weise ist zwischen den Abschnitten 38 und 40 samt zwischenliegender Feder 36 eine spielbehaftete, gleichzeitig verschleißarme, präzise und mechanisch einfach realisierte Lagerung ermöglicht, welche zudem, zwischen dem Anker 14 und einem gehäuseartig die Anordnung der Fig. 1 umgebenden, magnetisch leitenden Jochbügel 42, einen minimierten parasitären Luftspalt 44 zu einem freien Ende des Jochbügels 42 ermöglicht.

Der Jochbügel 42 wiederum ist durch Verstämmen bzw. Rollieren im Bereich des dem Anker 14 gegenüberliegenden stirnseitigen Endes 46 mit dem Kernabschnitt 16 - sowohl mechanisch fest als auch magnetisch flussleitend - verbunden.

Die Längsschnittansicht der Fig. 1 verdeutlicht zusätzlich, wie eine O-Ring-Dichtung 48, welche in eine mantelseitige Ringnut 50 der Kerneinheit 16 eingreift, diese Kernmittel 16 gegenüber der Spulenträgerbaugruppe 10 (genauer: gegenüber deren hohlzylindrischer Innenwand) abdichtet.

Da zudem insbesondere an den abschnittsweise hülsenartig-parallel verlaufenden Übergangsbereichen 52 bzw. 54 die Spulenträgerbaugruppe 10 mit der Ventilsitzbaugruppe 24 (durch ein hier besonders günstig anwendbares Laserschweißverfahren) unlösbar und gleichermaßen druckdicht verbunden ist, wird mittels dieser beiden Baugruppen (und unter Einschluss der Kerneinheit 16) ein druckdichter Ventilinnen- bzw. Ankerraum 56 bestimmt, in welchen durch den Einlass 28 eintretendes Fluid entweder (druckdicht) gehalten wird, dies entspricht dem Ventil-Schaltzustand der Fig. 1, oder aber durch den dem Ventilsitz 22 folgenden Auslass 26 austreten kann, wenn bei Bestromung der Spulenmittel 12 der Klappanker 14 (gegen die insoweit rückstellende Kraft der Druckfeder 20) anzieht, an die zugehörige Stirnseite der Kerneinheit 16 anschlägt und damit durch Lösen des Dichtkörpers 30 vom Ventilsitz 22 diesen fluidleitend freilegt.

Es wird deutlich, dass damit der - für Klappankerventile typische - kleine Klapp- bzw. Schwenkhub des Ankers 14 zum einen bestimmt wird von einer (bezogen auf eine Längs- bzw. Symmetrieachse 60) axialen Relativposition zwischen den Kernmitteln 16 und der Spulenträgerbaugruppe 10 - hier bestimmt ein Ringabsatz 62 an den Kernmitteln 16 diese Axialposition - und andererseits von einer axialen Relativposition zwischen der Spulenträgerbaugruppe 10 und der Ventilsitzbaugruppe 24: Diese greifen an den Positionen 52 bzw. 54 in axial verschiebbarer (und damit vor einem Verschweißen justierbarer) Weise in Form koaxialer, hülsenartiger Flächen aneinander und ermöglichen so insbesondere auf einfache und potentiell großserientaugliche Weise das Einstellen des (maximalen) Anker-Schwenk- bzw. Klapphubs. Genauer gesagt erfolgt während der Montage diese Einstellung dadurch, dass nach dem Einbringen der Kerneinheit 16 bzw. der Ankereinheit 14 und einem Zusammenführen der Baugruppen 10 und 24 deren (axialer) Abstand feinjustiert wird, bevor dann, in dieser justierten Relativposition, beide Baugruppen 10, 24 durch Verschweißen, insbesondere an den Bereichen 52, 54 und damit im Bereich der freien Schenkel bzw. offenen Enden des Jochbügels 42 die unlösbare und druckdichte Verbindung zwischen den Baugruppen 10 und 24 erfolgt (ohne dass eine mechanische Verbindung zum Bügel 42 erforderlich ist).

Damit ist der (zwischen Anker 14 und Kern 16) gebildete Arbeitsluftspalt nicht nur mit hoher Präzision, sondern auch automatisiert und damit potentiell großserientauglich einstellbar, so dass durch dieses Ausführungsbeispiel der Erfindung - und zahlreiche weitere Abwandlungen und Modifikationen des lediglich exemplarisch in Fig. 1 gezeigten Ventiltyps sind denkbar - schnelle Schaltzeiten mit hoher Genauigkeit im Dauerbetrieb und geringer Streuung (damit hoher Qualität) in der Fertigung kombiniert sind.

### BEZUGSZEICHENLISTE

- 10: Spulenträgerbaugruppe
- 12: Wicklung
- 14: Klappanker
- 15: Schwenk- und Klappgelenk/Lager
- 16: Kern
- 18: Ausnehmung
- 20: Druckfeder
- 22: Ventilsitz
- 24: Ventilsitzbaugruppe
- 26: Ventilauslass
- 28: Ventileinlass
- 30: Dichtkörper
- 32: Flachseite
- 34: Durchbruch
- 36: Druckfeder
- 38: Vorsprung
- 40: Gelenkvorsprung
- 42: Jochbügel
- 44: Luftspalt
- 46: Ende
- 48: Dichtung
- 50: Ringnut
- 52: Übergangsbereich
- 54: Übergangsbereich
- 56: Ventilinnen- bzw. Ankerraum
- 60: Längs- bzw. Symmetrieachse
- 62: Ringabsatz

## Patentansprüche

1. Elektromagnetische Klappanker-Ventilvorrichtung mit
relativ zu stationären Kernmitteln (16) und diese zumindest abschnittsweise umgebenden Spulenmitteln (12) in einem Gehäuse der Ventilvorrichtung schwenk- und/oder klappbar angelenkten und zum Zusammenwirken mit einem stationären Ventilsitz (22) ausgebildeten Ankermitteln (14),
die als Reaktion auf eine Bestromung der Spulenmittel zum Verschließen oder Freigeben des Ventilsitzes ausgebildet sind,
**dadurch gekennzeichnet, dass**
eine eine Wicklung der Spulenmittel tragende und die Kernmittel umschließende Spulenträgerbaugruppe (10) und eine den Ventilsitz ausbildende Ventilsitzbaugruppe (24) so ausgebildet sind,
dass beide für eine Montage der Ventilsitzvorrichtung gegeneinander justierbar und dann bevorzugt unlösbar miteinander verbindbar sind und in einem verbundenen bzw. Montagezustand einen durch das Justieren beeinflussbaren und/oder beeinflussten Schwenk- bzw. Klapphub der mindestens eine Flachseite ausbildenden Ankermittel begrenzen und/oder bestimmen.

2. Ventilvorrichtung nach Anspruch 1, **dadurch gekennzeichnet, dass** die Spulenträgerbaugruppe und/oder die Ventilsitzbaugruppe aus einem Polymermaterial realisiert ist und das unlösbare Verbinden durch ein bevorzugt druckdichtes Verformen und/oder Verschweißen des polymeren Materials erfolgt.

3. Ventilvorrichtung nach Anspruch 1 oder 2, **dadurch gekennzeichnet, dass** die Spulenträgerbaugruppe und/oder die Ventilsitzbaugruppe ein Schwenk- bzw. Klapplager (15) für die Ankermittel ausbilden und bevorzugt die Ankermittel zum Realisieren des Schwenk- bzw. Klapplagers einends zwischen der Spulenträgerbaugruppe und der Ventilsitzbaugruppe bewegbar gehalten sind.

4. Ventilvorrichtung nach einem der Ansprüche 1 bis 3, **dadurch gekennzeichnet, dass** ein magnetflussleitender Gehäuseabschnitt (42), insbesondere Jochbügel, des Gehäuses so dem Schwenk- bzw. Klapplager benachbart ausgebildet ist, dass ein Magnetflusseintrag eines von den bestromten Spulenmitteln erzeugten Magnetflusses in einen lagerseitigen Endabschnitt der Ankermittel, insbesondere stirnseitig, erfolgen kann.

5. Ventilvorrichtung nach Anspruch 4, **dadurch gekennzeichnet, dass** der magnetflussleitende Gehäuseabschnitt (42) an einer den Ankermitteln entlang einer axialen (60) bzw. Erstreckungsrichtung der Kernmittel (16) gegenüberliegenden Stirn- bzw. Endseite (46) mit den Kernmitteln magnetflussleitend verbunden ist, weiter bevorzugt durch ein materialverformendes Verbindungsverfahren.

6. Ventilvorrichtung nach einem der Ansprüche 1 bis 5, **dadurch gekennzeichnet, dass** die Ankermittel zum Zusammenwirken mit dem mittels der Ventilsitzbaugruppe realisierten Ventilsitz einen polymeren und/oder mittels eines Elastomermaterials realisierten Dichtabschnitt (30) aufweisen.

7. Ventilvorrichtung nach Anspruch 6, **dadurch gekennzeichnet, dass** der Dichtabschnitt auf und/oder an der mindestens einen Flachseite der Ankermittel gebildet ist und/oder sich mit seinem polymeren bzw. Elastomermaterial durch einen Durchbruch (34) in den Ankermitteln erstreckt.

8. Ventilvorrichtung nach einem der Ansprüche 1 bis 7, **dadurch gekennzeichnet, dass** die Ventilsitzbaugruppe einen dem düsenartig ausgebildeten und einem ersten Ventilein- oder -auslass (26) zugeordneten Ventilsitz
sowie einen zu diesem bevorzugt benachbart angeordneten zweiten Ventilein- bzw. -auslass (28), weiter bevorzugt einstückig, ausbildet.

9. Ventilvorrichtung nach einem der Ansprüche 1 bis 8, **dadurch gekennzeichnet, dass** die einen Anschlag für die Flachseite der Ankermittel ausbildende Kerneinheit über Dichtmittel, insbesondere eine umlaufende Ringdichtung (48), in der Spulenträgerbaugruppe (10) gehalten ist.

10. Ventilvorrichtung nach einem der Ansprüche 1 bis 9, **dadurch gekennzeichnet, dass** die Ankermittel durch Federmittel (20), insbesondere eine auf oder in die Kernmittel greifende Druckfeder, gegenüber dem Ventilsitz vorgespannt sind.

## Claims

1. An electromagnetic hinged armature valve device, comprising armature means (14) formed for interaction with a stationary valve seat (22) and hinged in a housing of the valve device such that they can be pivoted and/or folded relative to stationary core means (16) and to coil means (12) at least partially surrounding the stationary core means (16), the armature means (14) being formed to close or open the valve seat in response to an energization of the coil means, **characterized in that** a coil carrier assembly (10) carrying a winding of the coil means and surrounding the core means and a valve seat assembly (24) forming the valve seat are formed such that both are adjustable against one another for a mounting of the valve seat device, and are then preferably connectable in a non-detachable manner, and, in a connected or assembled state, limit and/or define a pivoting stroke or folding stroke of the armature means, which can be influenced and/or is influenced by the adjustment, the armature means forming at least one flat side.

2. The valve device according to claim 1, **characterized in that** the coil carrier assembly and/or the valve seat assembly is realized of polymeric material, and the inseparable connection is established by pressure-tight deforming and/or welding of the polymeric material.

3. The valve device according to claim 1 or 2, **characterized in that** the coil carrier assembly and/or the valve seat assembly form a pivoting or folding bearing (15) for the armature means and preferably the armature means are held movably at one end between the coil carrier assembly and the valve seat assembly for realizing the pivoting or folding bearing.

4. The valve device according to one of claims 1 to 3, **characterized in that** a magnetic flux-conducting housing section (42), in particular magnetic yoke bracket, of the housing is formed adjacent to the pivoting or folding bearing in such a manner that a magnetic flux generated by the energized coil means can be introduced into a bearing-side end portion of the armature means, in particular at the front face.

5. The valve device according to claim 4, **characterized in that** the magnetic flux-conducting housing section (42) is connected to the core means in a magnetic flux-conducting manner at a front or end face (46) opposing the armature means (16) in an axial (60) or extension direction of the core means (16), more preferably by a material-deformation procedure.

6. The valve device according to one of claims 1 to 5, **characterized in that** the armature means have a polymeric sealing section (30) and/or a sealing section (30) made of elastomer material for interacting with the valve seat realized by the valve seat assembly.

7. The valve device according to claim 6, **characterized in that** the sealing section is formed on and/or at the at least one flat side of the armature means and/or extends with its polymeric or elastomer material through an opening (34) in the armature means.

8. The valve device according to one of claims 1 to 7, **characterized in that** the valve seat assembly forms a valve seat which is designed as a nozzle and is assigned to a first valve inlet or outlet (26), as well as a second valve inlet or outlet (28) which is preferably arranged adjacent to the first and, more preferably, formed in one piece therewith.

9. The valve device according to one of claims 1 to 8, **characterized in that** the core unit which forms a stop for the flat side of the armature means is held in the coil carrier assembly (10) by means of the sealing means, in particular a circumferential ring seal (48).

10. The valve device according to one of claims 1 to 9, **characterized in that** the armature means are preloaded relative to the valve seat by means of spring means (20), in particular a compression spring engaging at or into the core means.

## Revendications

1. Dispositif de soupape à armature basculante électromagnétique comprenant des moyens d'armature (14) articulés de manière pivotante et/ou basculante dans un boîtier du dispositif de soupape par rapport à des moyens de noyau stationnaires (16) et à des moyens de bobine (12) entourant ceux-ci au moins par sections, lesquels moyens d'armature (14) sont formés pour coopérer avec un siège de soupape stationnaire (22) et sont formés pour fermer ou libérer le siège de soupape en réaction à une alimentation en courant des moyens de bobine, **caractérisé en ce qu'**un ensemble de support de bobine (10) portant un enroulement des moyens de bobine et entourant les moyens de noyau et un ensemble de siège de soupape (24) formant le siège de soupape sont formés de telle sorte que les deux puissent être ajustés l'un par rapport à l'autre pour un montage du dispositif de siège de soupape et puissent ensuite être connectés l'un à l'autre de préférence de manière inséparable et, dans un état connecté ou de montage, limitent et/ou déterminent une course de pivotement ou de basculement des moyens d'armature, laquelle peut être influencée et/ou est influencée par l'ajustement, les moyens d'armature formant au moins un côté plat.

2. Dispositif de soupape selon la revendication 1, **caractérisé en ce que** l'ensemble de support de bobine et/ou l'ensemble de siège de soupape est réalisé à partir d'un matériau polymère et la connexion inséparable s'effectue par une déformation et/ou un soudage de préférence étanche à la pression du matériau polymère.

3. Dispositif de soupape selon la revendication 1 ou 2, **caractérisé en ce que** l'ensemble de support de bobine et/ou l'ensemble de siège de soupape forment un palier pivotant ou basculant (15) pour les moyens d'armature et de préférence les moyens d'armature sont maintenus de manière mobile entre l'ensemble de support de bobine et l'ensemble de siège de soupape à une extrémité pour réaliser le palier pivotant ou basculant.

4. Dispositif de soupape selon l'une quelconque des revendications 1 à 3, **caractérisé en ce qu'**une section de boîtier (42) conductrice de flux magnétique, en particulier un support d'étrier magnétique, du boîtier est formée de manière adjacente au palier pivotant ou basculant de telle sorte qu'une entrée de flux magnétique d'un flux magnétique généré par les moyens de bobine alimentés en courant puisse s'effectuer dans une section d'extrémité côté palier des moyens d'armature, en particulier du côté frontal.

5. Dispositif de soupape selon la revendication 4, **caractérisé en ce que** la section de boîtier (42) conductrice de flux magnétique est connectée de manière conductrice de flux magnétique aux moyens de noyau au niveau d'un côté frontal ou d'extrémité (46) opposé aux moyens d'armature le long d'une direction axiale (60) ou d'extension des moyens de noyau (16), de manière davantage préférée par un procédé de connexion déformant le matériau.

6. Dispositif de soupape selon l'une quelconque des revendications 1 à 5, **caractérisé en ce que** les moyens d'armature présentent une section d'étanchéité (30) en polymère et/ou réalisée au moyen d'un matériau élastomère pour coopérer avec le siège de soupape réalisé au moyen de l'ensemble de siège de soupape.

7. Dispositif de soupape selon la revendication 6, **caractérisé en ce que** la section d'étanchéité est formée sur et/ou au niveau de l'au moins un côté plat des moyens d'armature et/ou s'étend avec son matériau polymère ou élastomère à travers un passage (34) dans les moyens d'armature.

8. Dispositif de soupape selon l'une quelconque des revendications 1 à 7, **caractérisé en ce que** l'ensemble de siège de soupape forme un siège de soupape implémenté à la manière d'une buse et associé à une première entrée ou sortie de soupape (26) ainsi qu'une deuxième entrée ou sortie de soupape (28) disposée de préférence de manière adjacente à celui-ci, de manière davantage préférée d'une seule pièce.

9. Dispositif de soupape selon l'une quelconque des revendications 1 à 8, **caractérisé en ce que** l'unité de noyau formant une butée pour le côté plat des moyens d'armature est maintenue par le biais de moyens d'étanchéité, en particulier un joint d'étanchéité annulaire périphérique (48), dans l'ensemble de support de bobine.

10. Dispositif de soupape selon l'une quelconque des revendications 1 à 9, **caractérisé en ce que** les moyens d'armature sont précontraints par rapport au siège de soupape par des moyens de ressort (20), en particulier un ressort de pression s'engageant sur ou dans les moyens de noyau.
